# EUROPEAN PATENT SPECIFICATION

(11) **EP 4 230 489 B1**
(45) Date of publication and mention of the grant of the patent: **10.09.2025**
(21) Application number: 23154707.6
(22) Date of filing: 02.02.2023
(51) Int. Cl.: B60W 10/184, B60W 10/18, B60W 10/11, B60W 30/18, B60W 30/095

(54) **SYSTEM AND METHOD FOR CONTROLLING A ROAD VEHICLE**
SYSTEM UND VERFAHREN ZUR STEUERUNG EINES STRASSENFAHRZEUGS
SYSTÈME ET PROCÉDÉ DE COMMANDE D'UN VÉHICULE ROUTIER

(30) Priority: 17.02.2022 JP 2022022781
(43) Date of publication of application: 23.08.2023
(73) Proprietor: Suzuki Motor Corporation, Hamamatsu-shi, Shizuoka 432-8611 (JP)
(72) Inventor: HAYASHIDA, Kentaro, HAMAMATSU-SHI, 432-8611 (JP)
(74) Representative: Plasseraud IP

(56) References cited:
- EP-A1- 1 655 191
- EP-A1- 3 219 566
- US-A1- 2019 084 569
- US-A1- 2021 237 722

## Description

### BACKGROUND OF THE INVENTION

The present invention relates to systems and methods for controlling a road vehicle.

JP 2017-48877 A (Patent Document 1) discloses a system for controlling a road vehicle. This known system controls the vehicle braking system to keep the vehicle fully stopped even after the vehicle driver lifts his/her foot off the brake pedal while the vehicle is at a complete stop (brake hold) and puts an automatic gearbox into a neutral state while the vehicle is at a complete stop with the gearbox in DRIVE (neutral hold). This system predicts whether the driver steps on the accelerator pedal (gas pedal) to start the vehicle on the basis of the external environment around the vehicle and reinstates the gearbox out of a neutral state.

Because it reinstates the gearbox out of a neutral state before the driver starts the vehicle, the system can prevent startability from worsening while achieving a better fuel efficiency expected with neutral hold.

[Patent Document 1] JP 2017-48877 A

The system described in JP 2017-48877 contains no description about an action taken to counteract a failure that the vehicle brake system cannot keep the vehicle fully stopped while the vehicle is at a complete stop. In this case, one approach is to terminate neutral hold and reinstate the gearbox out of a neural state. This approach, however, hampers the achievement of the improved fuel efficiency expected with neutral hold. Another approach is to keep neutral control continuing. This approach, however, causes a risk that the vehicle may roll forward.

In addition, the known system cancels brake hold and neutral hold if the vehicle driver steps on the accelerator pedal inadvertently. This hampers the achievement of the improved fuel efficiency expected. Moreover, there is a risk that the vehicle may roll forward.

Other examples of background art can be found in US2019/084569A1, and EP3219566A1.

### SUMMARY OF THE INVENTION

Thus, there exists a need for a system and method for controlling a vehicle to improve fuel efficiency and safety while the vehicle is at a complete stop.

One aspect of the invention provides a system for controlling a road vehicle, including: an automatic gearbox; a parking brake; a vehicle braking system, and a controller configured to control the vehicle braking system in accordance with a brake hold control logic to keep the vehicle fully stopped even after the vehicle driver lifts his/her foot off a brake pedal while the vehicle is at a complete stop in DRIVE, and put the gearbox into neutral in accordance with a neutral hold control logic while the vehicle is at a complete stop in DRIVE, the controller being configured to activate the parking brake, in order for neutral hold to continue, following determination that the vehicle braking system cannot work properly in accordance with the brake hold control logic, thus failing to keep the vehicle fully stopped while the vehicle is at a complete stop in DRIVE.

In a further aspect of the invention, the controller is configured to allow neutral hold to continue despite an accidental driver input via the accelerator pedal following determination that at least one of the target objects detected by means of at least one obstacle sensor is too close to and an obstacle to the vehicle while the vehicle is at a complete stop in DRIVE.

Optionally, the controller is configured to signal the driver to fix the vehicle braking system following determination that the vehicle braking system cannot work properly in accordance with the brake hold control logic, thus failing to keep the vehicle fully stopped while the vehicle is at a complete stop in DRIVE.

Another aspect of the invention provides a method of controlling a road vehicle having a vehicle braking system, a parking brake, and an automatic gearbox, the method including: controlling the vehicle braking system in accordance with a brake hold control logic to keep the vehicle fully stopped while the vehicle is at a complete stop in DRIVE; putting the gearbox into neutral in accordance with a neutral hold control logic while the vehicle is at a complete stop in DRIVE, and activating the parking brake, in order for neutral hold to continue, following determination that the vehicle braking system cannot work properly in accordance with the neutral hold control logic, thus failing keep the vehicle fully stopped while the vehicle is at a complete stop in DRIVE.

Furthermore, the method includes detecting one or more target objects in an environment ahead of and in the path of the vehicle, and allowing neutral hold to continue despite an accidental driver input via the accelerator pedal following determination that at least one of the target objects detected is too close to and an obstacle to the vehicle while the vehicle is at a complete stop in DRIVE.

As described, both fuel efficiency and safety are improved.

### BRIEF DESCRIPTION OF THE DRAWINGS

FIG. 1 is a block diagram of an example system and method for controlling a vehicle.
FIG. 2A through FIG. 2G are example plots of the status of the parking brake, the failure status of the hydraulic pressure control, the status of "Brake Hold", the status of "Neutral Hold", the status of the brake pedal, the status of accelerator (gas) pedal, and vehicle speed, respectively.
FIG. 3A through FIG. 3G are example plots of the status of approaching object(s), the status of "Brake Hold", the status of "Neutral Hold", the status of determination whether or not accidental driver operation happens, the status of the brake pedal, the accelerator pedal position, and the vehicle speed, respectively.
FIG. 4A through FIG. 4G are example plots of the status of approaching object(s), the status of "Brake Hold", the status of "Neutral Hold", the status of determination whether or not accidental driver operation happens, the status of the brake pedal, the accelerator pedal position, and the vehicle speed, respectively.
FIG. 5A through 5F are example plots of the status of the cruise control, the status of the automatic braking, the status of "Neutral Hold", the status of the brake pedal, the accelerator pedal position, and the vehicle speed, respectively

### DETAILED DESCRIPTION

A system for controlling a road vehicle is disclosed. The system includes: an automatic gearbox; a parking brake; a vehicle braking system, and a controller configured to control the vehicle braking system in accordance with a brake hold control logic to keep the vehicle fully stopped even after the vehicle driver lifts his/her foot off a brake pedal while the vehicle is at a complete stop in DRIVE, and put the gearbox into neutral in accordance with a neutral hold control logic while the vehicle is at a complete stop in DRIVE. The controller is configured to activate the parking brake, in order for neutral hold to continue, following determination that the vehicle braking system cannot work properly in accordance with the brake hold control logic, thus failing to keep the vehicle fully stopped while the vehicle is at a complete stop in DRIVE. This system improves fuel efficiency and safety.

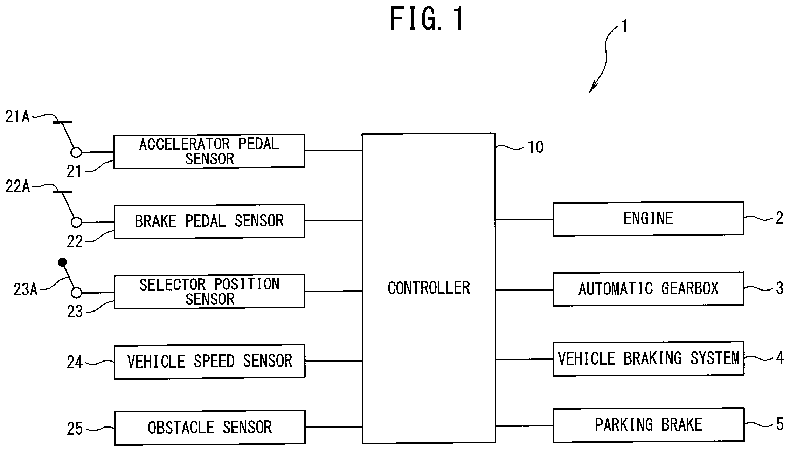

Referring to the accompanying drawings, FIG. 1 shows a system for controlling a vehicle 1 in accordance with the present invention. The vehicle 1 includes an engine 2, an automatic gearbox 3, a vehicle braking system 4, a parking brake 5, and a controller 10.

The engine 2 has two or more cylinders. In this example, the engine 2 is a four-stroke internal combustion engine in which the piston in each cylinder completes four separate strokes (i.e., intake, compression, combustion, and exhaust) while turning the crankshaft.

The automatic gearbox 3 has a power input shaft, not shown, connected to an external motive power source, typically the crankshaft of the internal combustion engine 2, changes gears (or speed ratios) between the power input shaft and a power output shaft, not shown. The automatic gearbox 3 has a ratio changing mechanism to adjust a speed ratio between the rotation of the power input shaft and the rotation of the power output shaft in a stepwise manner or a stepless manner. The ratio changing mechanism includes but not limited to a planetary geartrain, not shown, or a V-belt which runs between two variable-diameter pulleys, not shown.

The automatic gearbox 3 has a forward clutch mechanism, not shown, located on the power input shaft. The forward clutch mechanism may be hydraulically operated and disengages to put the automatic gearbox 3 into a neutral state in which power transfer between the power input shaft and power output shaft is interrupted. A torque converter connects the engine 2 to the power input shaft of the automatic gearbox 3. With the forward clutch mechanism being disengaged, the automatic gearbox 3 is in a neutral state to apply no substantial load to the turbine of the torque converter, allowing the engine 2 to idle with good fuel efficiency.

To stop or slow down the vehicle 1, the vehicle braking system 4 transmits the pedal force to brakes by means of a confined hydraulic fluid through force transmission. The force applying to the brake pedal 22A is multiplied and transmitted to all the brakes. The vehicle braking system 4 includes a master cylinder. The master cylinder is connected by tubing to the wheel cylinder on each of the wheels. The hydraulic pressure in the braking system 4 is increased or held in response to a control signal from a controller 10, which will be described later. This is achieved by means of a hydraulic circuit and valves in the braking system 4.

The parking brake 5 is engaged to ensure that a parked vehicle stays in place, especially on hills and other declines. When engaged, it locks the wheels in place and ensures that the vehicle does not roll away. The parking brake 5 is an electric parking brake that is actuated by an electric motor, not shown, and automatically engaged in response to a control signal from the controller 10 aside from the driver input.

The controller 10 is a computer unit that includes a central processing unit (CPU), a random access memory (RAM), a read only memory (ROM), a flash memory for storing backup data, input ports, and output ports.

The ROM of this computer unit stores a program or programs, on which the computer unit runs to achieve features the controller 10 is expected to have, together with various constants, maps and the like.

That is, the CPU executes the programs stored in the ROM using the RAM as a work area, and so the computer unit achieves features the controller 10 is expected to have.

Various sensors including an accelerator pedal sensor 21, a brake pedal sensor 22, a selector position sensor 23, a vehicle speed sensor 24, and at least one obstacle sensor 25 are connected to the input ports of the controller 10 .

The accelerator pedal sensor 21 detects the driver input via the accelerator pedal 21A and provides, as an input, a signal indicative of the result of detection to the controller 10 .

The brake pedal sensor 22 detects the driver input via the brake pedal 22A and provides, as an input, a signal indicative of the result of detection to the controller 10.

The selector position sensor 23 detects the selected position of the selector 23A manipulated by the driver and provides, as an input, a signal indicative of the selected position to the controller 10. The positions which may be selected by the selector 23A include park "PARK," reverse "REVERSE, " neutral "NEUTRAL," and drive "DRIVE."

The vehicle speed sensor 24 detects the speed of vehicle 1 and provides, as an input, a signal indicative of the detected vehicle speed to the controller 10. The at least one obstacle sensor 25 detects one or more target objects in an environment ahead of and in the path of the vehicle 1, and it provides, as an input, signals indicative of the detected one or more target objects to the controller 10. The obstacle sensor 25 has a camera and/or a radar, not shown, which are arranged for detecting, as target objects, other vehicles, pedestrians, and the like.

Connected to the output ports of the controller 10 are various targets subject to control which include the engine 2, automatic gearbox 3, vehicle braking system 4, and parking brake 5.

The controller 10 includes a neutral hold control logic, a brake hold control logic, a cruise control logic, and an autobrake control logic. Thus, the vehicle 1 has a brake hold feature, a cruise control feature, and an autobrake feature.

"Brake Hold" automatically holds the brakes for the driver while at a complete stop. The driver can lift his/her foot off the brake pedal 22A once fully stopped, and "Brake Hold" will keep the vehicle 1 fully stopped. The control unit 10 increases or maintains the hydraulic pressure within the wheel cylinders of the braking system 4 to keep the vehicle 1 fully stopped even after the driver lifts his/her foot off the brake pedal 22A. The driver can lift his/her foot off the brake pedal 22A when the vehicle comes to a complete stop without interrupting braking force to keep the vehicle 1 fully stopped until the driver presses the accelerator pedal 21A.

Cruise control is a system that automatically controls the speed of the vehicle 1 by accelerating or slowing the vehicle 1 to maintain a steady speed set by the driver, and so the driver can lift his/her off the accelerator pedal 21A. If approaching a vehicle ahead having a speed lower than the speed set by the driver, the cruise control system adjusts the speed of the vehicle 1 to maintain a safe distance from the vehicle ahead. Using the information from the obstacle sensor 25, the controller 10 adjusts engine torque of the engine 2, gear in the automatic gearbox 3 and brake pressure, i.e., brake force, in the wheel cylinders of the braking system 4 to accelerate or decelerate or stop the vehicle 1 to maintain a safe distance from the vehicle ahead.

Thus, the cruise control system in this example may be called adaptive cruise control (ACC) or cruise control with a follow-up feature. This cruise control system is useful for long drives across highways and can reduce driver fatigue and improve comfort by allowing positioning changes more safely.

Automatic braking is a part of cruise control, and it is a system that automatically controls hydraulic pressure in the braking system 4 to slow or stop the vehicle 1 even if the drive lifts his/her foot off brake pedal 22A. The controller 10 executes automatic braking while performing cruise control.

"Neutral Hold" is a system that puts the automatic gearbox 3 in neutral while the vehicle 1 is at a complete stop with the automatic gearbox in DRIVE. The controller 10 puts the automatic gearbox 3 into neutral following determination that the selector 23A is in DRIVE, the vehicle 1 is at a complete stop, the brake pedal 22A is pressed, and the accelerator pedal 21A is not pressed.

One advantage of neutral hold is good fuel efficiency to maintain a steady idling speed of the engine 2 while the vehicle 1 is at a complete stop because the torque converter coupled to the automatic gearbox 3 does not apply load to the engine 2.

"Brake Hold" may fail to work properly during "Neutral Hold." In this case, the vehicle braking system 4 does not work properly, in accordance with the brake hold logic, and fails to keep the vehicle 1 fully stopped. The cause of such a failure of "Brake Hold" is inadequate operation of a hydraulic pressure hold solenoid. Even in such a case, the vehicle braking system 4 will keep the vehicle 1 fully stopped if the driver steps on the brake pedal 22A. Deactivating "Neutral Hold" is one approach, but this approach proves to be inappropriate in achieving a better fuel economy expected with "Neutral Hold" and requires the driver to step on the brake pedal 22A to keep the vehicle 1 fully stopped.

To address the challenge, the controller 10 is configured to put the parking brake 5 on, in order for "Neutral Hold" to continue, following determination that the vehicle braking system 4 cannot work properly in accordance with a neutral hold control logic, thus failing to keep the vehicle 1 fully stopped.

With an object (i.e., a vehicle) ahead is too close to and an obstacle to the vehicle 1, the driver may inadvertently and rapidly step on the accelerator pedal 21A during "Brake Hold" and "Neutral Hold" while the vehicle 1 is at a complete stop. For example, the driver may accidentally and rapidly step on the accelerator pedal 21A instead of the brake pedal 22A. In order to avoid collision with the vehicle ahead, it is required to keep the vehicle 1 fully stopped to prevent the vehicle 1 from rolling forward if the driver inadvertently and rapidly steps on the accelerator pedal 22A. If, in this case, both "Brake Hold" and "Neutral Hold" are deactivated in response to such inadvertent driver operation, the vehicle 1 rolls forward. Furthermore, achievement of a better fuel economy expected with "Neutral Hold" is impossible.

In the above-mentioned case, it is preferrable to keep the throttle closed to maintain the idling speed of the engine 2 because the driver has no intention to start the vehicle 1. To address the challenge, the controller 10 is configured to disable a torque command in response to a rapid increase in driver input via the accelerator pedal 21A, in order for neutral hold to continue, following determination that at least one of the target objects detected in a circumstance ahead of and in the path of the vehicle 1 by means of the at least one obstacle sensor 25 is too close to and an obstacle to the vehicle 1.

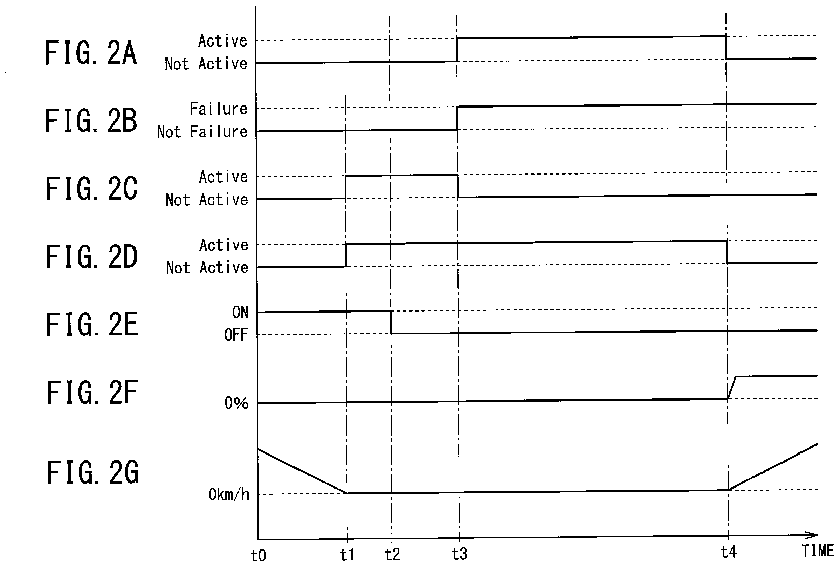

Next, FIG. 2A through FIG. 2G illustrate how "Brake Hold" and "Neutral Hold" operate while the vehicle 1 is at a complete stop in DRIVE if a failure of "Brake Hold" happens during "Neutral Hold." In particular, FIG. 2A through FIG, 2G illustrate actions taken by the controller 10 if the vehicle braking system 4 does not work properly, in accordance with the brake hold control logic, and fails to keep the vehicle 1 fully stopped (a failure of "Brake Hold") during "Neutral Hold" while the vehicle is at a complete stop in DRIVE (or with the selector 23A being in DRIVE).

As described before, FIG. 2A through FIG. 2G are example plots of the status of the parking brake 5, the failure status of the hydraulic pressure control, the status of "Brake Hold", the status of "Neutral Hold", the status of the brake pedal 22A, the status of accelerator (gas) pedal 21A, and vehicle speed, respectively. The horizontal axis represents time.

In FIG. 2A, the parking brake 5 is activated (labelled "Active") or not activated (labelled "Not Active"). In FIG. 2B, the hydraulic pressure control in the vehicle braking system 4 works properly (labelled "Not Failure") or it does not work properly (labelled "Failure"). In FIG. 2C, "Brake Hold" is not activated (labelled "Not Active") or activated (labelled "Active"). In FIG. 2D, "Neutral Hold" is not activated (labelled "Not Active") or activated (labelled "Active"). In FIG. 2E, the status of the brake pedal 22A is ON while the brake pedal 22A is pressed beyond a threshold (labelled "ON") or otherwise OFF (labelled "OFF"). FIG. 2F is an example plot of the accelerator pedal position. FIG. 2G is an example plot of the vehicle speed.

At time t0, the driver steps on the brake pedal 22A (see "ON" in FIG. 2E) with the accelerator pedal 21A released (see "0%" in FIG. 2F), and so the vehicle slows down (see FIG. 2G). Moreover, at time t0, the parking brake 5 is not activated (see "Not Active" in FIG. 2A), the vehicle braking system 4 works properly (see "Not Failure" in FIG. 2B), "Brake Hold" is not activated (see "Not Active" in FIG. 2C), and "Neutral Hold" is not activated (see "Not Active" in FIG. 2D).

After that, at time t1, the vehicle 1 comes to a holt in DRIVE (i.e., with its gearbox 3 in DRIVE), and so the vehicle speed is 0 km/h (see FG. 2G). At this time, the controller 10 activates "Brake Hold" (see "Active" in FIG, 2C) and "Neutral Hold" (see "Active" in FIG. 2D). In particular, the controller 10 controls the vehicle braking system 4 using a brake hold control logic to keep the vehicle 1 fully stopped and puts the gearbox 3 into neutral using a neutral hold control logic following determination that the vehicle 1 is at a complete stop in DRIVE.

After that, at time t2, the driver lifts his/her foot off the brake pedal 22A and the brake pedal sensor 22 provides "OFF" signal to the controller 10, but the controller 10 controls the vehicle braking system 4 to keep the vehicle 1 fully stopped, in order for "Neutral Hold" to continue, even after the driver lifts his/her foot off the brake pedal 22A.

After that, at time t3, the hydraulic pressure control in the vehicle braking system 4 does not work properly in accordance with the brake hold control logic, thus failing to keep the vehicle 1 fully stopped (see "Failure" in FIG. 2B). In this case, the controller 10 activates the parking brake 5 (see "Active" in FIG. 2A), in order for "Neutral Hold" to continue, to keep the vehicle 1 fully stopped following determination that the vehicle braking system 4 cannot work properly in accordance with the brake hold control logic, thus failing to keep the vehicle 1 fully stopped. The controller 10 may determine whether the parking brake 5 can keep the vehicle 1 fully stopped before allowing "Neutral Hold" to continue. The controller 10 deactivates "Brake Hold" (see "Not Active" in FIG. 2C) as the braking system 4 does not work properly in accordance with the brake hold control logic, thus failing to keep the vehicle 1 fully stopped.

As described above, in case of a failure that the vehicle braking system 4 fails to work properly, in accordance with the brake hold control logic, to maintain brake force strong enough to keep the vehicle 1 fully stopped, the controller 10 switches control from the braking system 4 to the parking brake 5 to take over the control of the parking brake 5 to create sufficient brake force for keeping the vehicle 1 fully stopped in order for "Neutral Hold" to continue.

After that, at time t4, the vehicle driver steps on the accelerator pedal 21A (see FIG. 2F) to drive the vehicle 1 from a complete stop, so the controller 10 disengages the parking brake 5 (see "Not Active" in FIG. 2B) and turns off "Neutral Hold" (see FIG. 2D). As a result, the vehicle 1 rolls forward and the vehicle speed increases (see FIG. 2G).

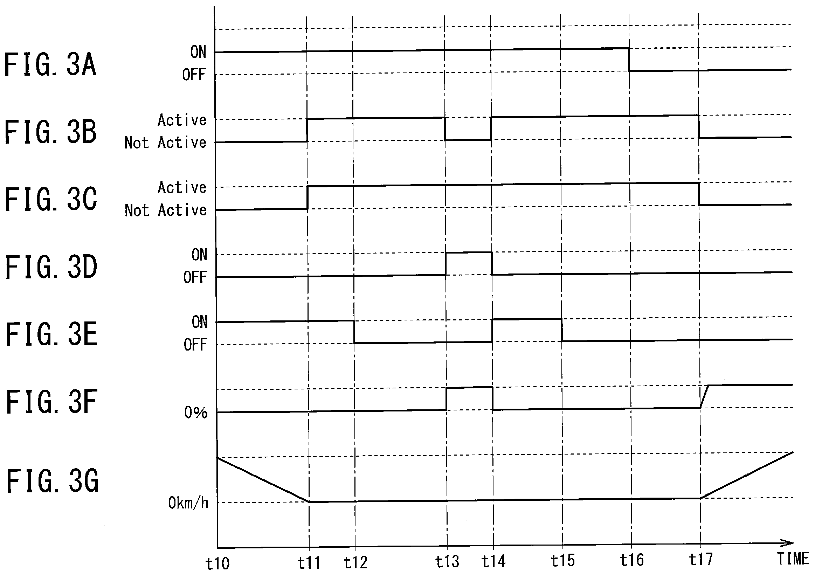

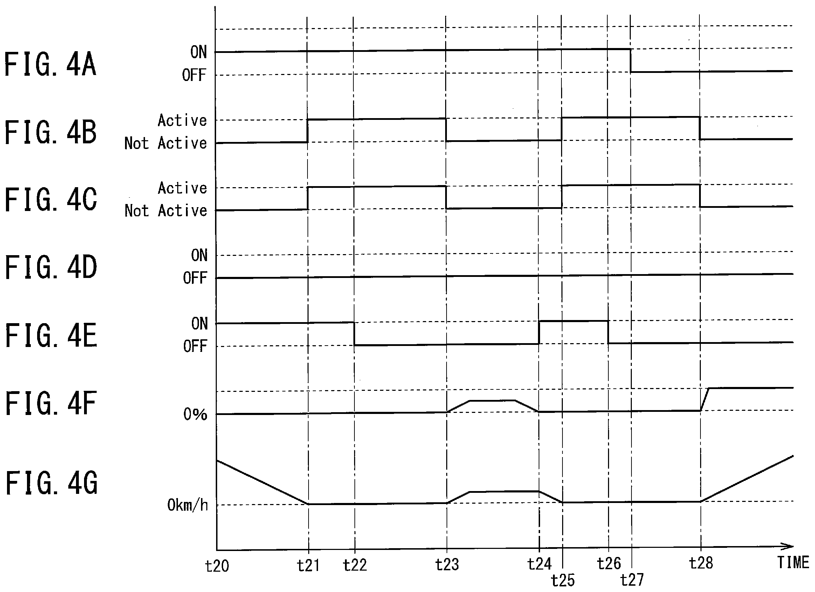

Referring next to FIG. 3A through FIG. 3G and FIG. 4A through FIG. 4G, it is described how "Neutral Hold" operates in response to a driving in which an obstacle is too close to and an obstacle to the vehicle 1. Such driving occurs during stop-and-go traffic. That is, FIG. 3A through FIG. 3G and FIG. 4A through FIG. 4G illustrate actions taken by the controller 10 during stop-and-go traffic in which the driver steps on the brake pedal 22A to approach an object, i.e., a vehicle ahead, so the vehicle 1 slows down in DRIVE to come to a halt with the object being too close to and an obstacle to the vehicle 1, "Brake Hold" is activated following determination that the vehicle 1 is at a complete stop in DRIVE, and then the driver steps on the accelerator pedal 21A to restart the vehicle 1.

In each of FIG. 3A and FIG. 4A, the vertical axis represents the status of approaching objects. In each of FIG. 3B and FIG. 4B, the vertical axis represents "Brake Hold". In each of FIG. 3C and FIG. 4C, the vertical axis represents "Neutral Hold". In each of FIG. 3D and FIG. 4D, the vertical axis represents the status of determination whether or not accidental driver operation happens. In each of FIG. 3E and FIG. 4E, the vertical axis represents the status of the brake pedal 22A. In each of FIG. 3F and FIG. 4F, the vertical axis represents the accelerator pedal position. In each of FIG. 3G and FIG. 4G, the vertical axis represents the vehicle speed. In FIG. 3A through FIG. 3G, the horizontal axis represents time.

In each of FIG. 3A and FIG. 4A, the status of approaching objects is ON under the circumstance that at least one of target objects in an environment ahead of and in the path of the vehicle is too close to and an obstacle to the vehicle 1, otherwise it is OFF. In each of FIG. 3B and FIG. 4B, "Brake Hold" is not activated (labelled "Not Active") or activated (labelled "Active"). In each of FIG. 3C and FIG. 4C, "Neutral Hold" is not activated (labelled "Not Active") or activated (labelled "Active"). In each of FIG. 3D and FIG. 4D, the status of determination whether or not accidental driver operation happens is ON when the driver inadvertently and rapidly steps on the accelerator pedal 21A under the circumstance that at least one of target objects in an environment ahead of and in the path of the vehicle is too close to and an obstacle to the vehicle 1, otherwise it is OFF. In each of FIG. 3E and FIG. 4E, the status of the brake pedal 22A is ON when the vehicle driver presses the brake pedal 22 beyond a threshold (labelled "ON"), otherwise it is OFF (labelled "OFF").

Next, FIG. 3A through FIG. 3G illustrate how "Brake Hold" and "Neutral Hold" operate while the vehicle 1 is at a complete stop in DRIVE if, during "Neutral Hold", the driver inadvertently and rapidly steps on the accelerator pedal 21A under the circumstance that at least one of target objects in an environment ahead of and in the path of the vehicle is too close to and an obstacle to the vehicle 1.

At time t10, the driver steps on the brake pedal 22A (see "ON" in FIG. 3E) with the accelerator pedal 21A released (see "0%" in FIG. 3F), so the vehicle slows down (see FIG. 3G). Such a driving occurs during stop-and-go traffic. Moreover, at time t20, the controller 10 determines that at least one of target objects in an environment ahead of and in the path of the vehicle is too close to and an obstacle to the vehicle 1 and turns ON the status of approaching objects (see "ON" in FIG. 3A). The controller 10 deactivates "Brake Hold" (see "Not Active" in FIG. 3B) and "Neutral Hold" (see "Not Active" in FIG. 3C). At this time t10, the accelerator pedal 21A is released, so the controller 10 turns OFF the status of determination whether or not accidental driver operation happens (see "OFF" in FIG. 3D), thus determining that no accidental driver operation happens.

After that, at time t11 the vehicle 1 comes to a holt in DRIVE (i.e., with its gearbox 3 in DRIVE), so the vehicle speed is 0 km/h (see FG. 3G). At this time t11, the controller 10 activates "Brake Hold" (see "Active" in FIG, 3B) and "Neutral Hold" (see "Active" in FIG. 3C).

After that, at time t12, the driver lifts his/her foot off the brake pedal 22A and the controller 10 turns OFF the status of the brake pedal (see "OFF" in FIG. 3E), but the controller 10 keeps activating "Brake Hold" (see "Active" in FIG. 3B) and controls the vehicle braking system 4 to keep the vehicle 1 fully stopped, in order for "Neutral Hold" to continue, even after the driver lifts his/her foot off the brake pedal 22A. "Brake Hold" and "Neutral Hold" continue even after the driver lifts his/her foot off the brake pedal 22A.

After that, at time t13, the driver inadvertently and rapidly presses the accelerator pedal 21A (i.e., an accidental drive input via the accelerator pedal 21A) while the status of approaching object(s) is ON (see FIG. 3A), i.e., under the circumstance that at least one of target objects in an environment ahead of and in the path of the vehicle is too close to and an obstacle to the vehicle 1, so the controller 10 determines that an accidental driver input via the accelerator pedal 21A happens and turns ON the status of determination whether or not accidental driver operation happens (see "ON" in FIG. 3D). In accordance with the normal settings, the controller 10 deactivates "Brake Hold" (see "Not Active" in FIG. 3B) in response to the driver operation to press the accelerator pedal 21A, but it overrides the normal settings for "Neutral Hold" in response to the ON level of the status of determination whether or not accidental driver operation happens and prevents deactivation of "Neutral Hold" in response to the driver operation to press the accelerator pedal 21A. The power command in response to such rapid increase in driver input via the accelerator pedal 21A causes the engine 2 to race. "Brake Hold" is OFF (deactivated) and "Neutral Hold" is ON (activated), so the vehicle 1 is likely to roll forward or backward because of vibrations of the vehicle 1 caused due to such engine racing and/or the gradient of hills or other declines. This makes it easy for the driver to recognize that the accidental driver input via the accelerator pedal happened.

After that, at time t14, the driver lifts his/her foot off the accelerator pedal 21A and steps on the brake pedal 22A to stop the vehicle 1, so the controller 10 activates "Brake Hold" (see "Active" in FIG. 3B) to keep the vehicle 1 fully stopped again. In addition, at time t14, the controller 10 determines that the accidental driver input is over when the driver lifts his/her foot off the accelerator pedal 21A, so the controller 10 turns OFF the status of determination whether or not accidental driver operation happens.

After that, at time t15, the driver lifts his/her foot off the brake pedal 22A (see "OFF" in FIG. 3E). The controller 10 keeps "Brake Hold" and "Neutral Hold" activated (see "Active" in FIG. 3B and FIG. 3C).

After that, at time t16, the controller 10 does not determine that at least one of target objects in an environment ahead of and in the path of the vehicle is too close to and an obstacle to the vehicle 1 and turns OFF the status of approaching objects (see "OFF" in FIG. 3A). Such a status occurs when the vehicle ahead has started and left the vehicle 1.

After that, at time t17, the driver deliberately steps on the accelerator pedal 21A, so the controller 10 deactivates "Brake Hold" and "Neutral Hold". Because both "Brake Hold" and "Neutral Hold" are deactivated, the vehicle 1 starts, and the vehicle speed increases (see FIG. 3G).

As described, the controller 10 deactivates "Brake Hold", but keeps "Neutral Hold" activated to interrupt power path to the drive wheels following determination that the accidental driver operation to press the accelerator pedal 21A happens, thus preventing the engine power from being delivered to the drive wheels.

Next, FIG. 4A through FIG. 4G illustrate how "Brake Hold" and "Neutral Hold" operate while the vehicle 1 is at a complete stop in DRIVE if the driver deliberately steps on the accelerator pedal 21A, without any accidental driver operation, under the circumstance that at least one of target objects in an environment ahead of and in the path of the vehicle is too close to and an obstacle to the vehicle 1. Such a driving occurs during stop-and-go traffic.

At time t20, the driver steps on the brake pedal 22A (see "ON" in FIG. 4E) with the accelerator pedal 21A released (see "0%" in FIG. 4F), so the vehicle slows down (see FIG. 4G). Such a driving occurs during stop-and-go traffic. Moreover, at time t20, the controller 10 determines that at least one of target objects in an environment ahead of and in the path of the vehicle is too close to and an obstacle to the vehicle 1, and turns ON the status of approaching objects (see FIG. 4A). The controller 10 deactivates "Brake Hold" (see "Not Active" in FIG. 4B) and "Neutral Hold" (see "Not Active" in FIG. 4C). At this time t20, the accelerator pedal 21A is released, so the controller 10 turns OFF the status of determination whether or not accidental driver operation happens (see "OFF" in FIG. 4D), thus determining that no accidental driver operation happens.

After that, at time t21 the vehicle 1 comes to a holt in DRIVE (i.e., with its gearbox 3 in DRIVE), so the vehicle speed is 0 km/h (see FG. 4G). At this time t21, the controller 10 activates "Brake Hold" (see "Active" in FIG, 4B) and "Neutral Hold" (see "Active" in FIG. 4C).

After that, at time t22, the driver lifts his/her foot off the brake pedal 22A and the controller 10 turns OFF the status of the brake pedal (see "OFF" in FIG. 4), but the controller 10 keeps activating "Brake Hold" (see "Active" in FIG. 4B) and controls the vehicle braking system 4 to keep the vehicle 1 fully stopped, in order for "Neutral Hold" to continue, even after the driver lifts his/her foot off the brake pedal 22A.

After that, at time t23, the driver deliberately steps on the accelerator pedal 21A while the status of approaching object(s) is ON (see FIG. 3A), i.e., under the circumstance that at least one of target objects in an environment ahead of and in the path of the vehicle is too close to and an obstacle to the vehicle 1, so the controller 10 deactivates "Brake Hold". Because the driver does not inadvertently and rapidly press the accelerator pedal 21A at time t23, the controller 10 does not determine that accidental driver operation happens and keeps the status of determination whether or not accidental driver operation happens turned OFF (see "OFF" in FIG. 4D), and it deactivates "Neutral Hold", too. Because both "Brake Hold" and "Neutral Hold" are deactivated in response to the deliberate driver operation to step on the accelerator pedal 21A, the vehicle 1 starts, and the vehicle speed increases (see FIG. 4G).

After that, at time t24, the driver lifts his/her foot off the accelerator pedal 21A and steps on the brake pedal 22A. After that, at time t25, the vehicle 1 comes to a halt in DRIVE and the vehicle speed is 0 km/h (see FIG. 4G), so the controller 10 activates "Brake Hold" and "Neutral Hold" again.

After that, at time t26, the driver lifts his/her foot off the brake pedal 22A (see "OFF" in FIG. 4E). After that, at time t27, the controller 10 does not determine that at least one of target objects in an environment ahead of and in the path of the vehicle is too close to and an obstacle to the vehicle 1, and turns OFF the status of approaching objects (see "OFF" in FIG. 4A).

After that, at time t28, the driver steps on the accelerator pedal 21A, so that the controller 10 deactivates "Brake Hold" and "Neutral Hold". Because both "Brake Hold" and "Neutral Hold" are deactivated, the vehicle 1 starts, and the vehicle speed increases (see FIG. 4G).

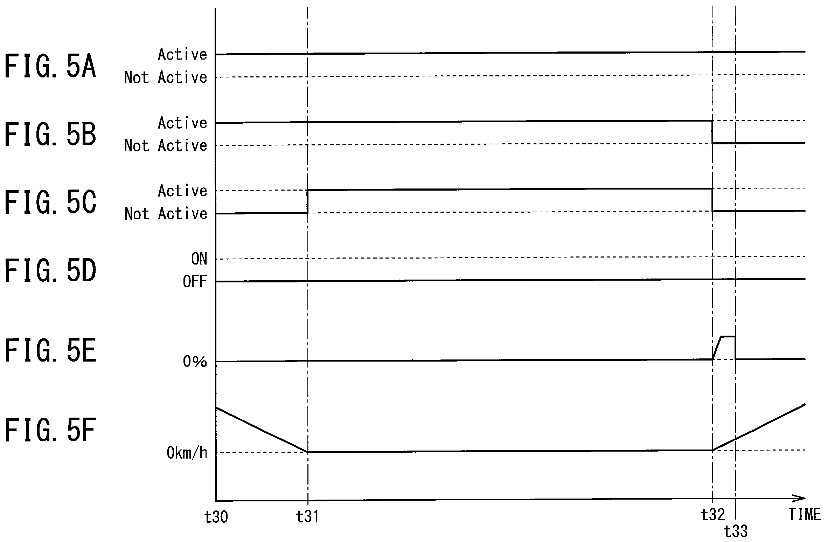

Next, FIG. 5A through FIG. 5F illustrate how "Neutral Hold" operates if a cruise control system featuring automatic braking keeps the vehicle 1 fully stopped while the vehicle is at a complete stop in DRIVE.

As described before, FIG. 5A through FIG. 5F are example plots of the status of the cruise control, the status of the automatic braking, the status of "Neutral Hold", the status of the brake pedal, the accelerator pedal position, and the vehicle speed, respectively. The horizontal axis represents time.

In FIG. 5A, the cruise control is activated (labelled "Active") or not activated (labelled "Not Active"). In FIG. 5B, the automatic braking is not activated (labelled "Not Active") or activated (labelled "Active"). In FIG. 5C, "Neutral Hold" is not activated (labelled "Not Active") or activated (labelled "Active"). In FIG. 5D, the status of the brake pedal 22A is ON while the brake pedal 22A is pressed beyond a threshold (labelled "ON") or otherwise OFF (labelled "OFF"). FIG. 5E is an example plot of the accelerator pedal position. FIG. 5F is an example plot of the vehicle speed.

At time t30, the cruise control is active (see "Active" in FIG. 5A), allowing the driver to maintain the same speed without having to keep his/her foot on the accelerator pedal 21A or brake pedal 22A. At this time t30, the cruise control activates the automatic braking (see "Active" in FIG. 5B) to slow the vehicle 1 down to follow another vehicle in front of the vehicle 1. In this situation, "Neutral Hold" is not activated (see "Not Active" in FIG. 5C).

After that, at time t31, the vehicle speed becomes 0 km/h (see FIG. 5F), so the controller 10 activates "Neutral Hold" and puts the gearbox 3 into neutral (see "Active" in FIG. 5C).

After that, at time t32, the driver steps on the accelerator pedal 21A (see FIG. 5F), so the controller 10 deactivates the automatic braking (see "Not Active" in FIG. 5B) and "Neutral Hold" (see "Not Active" in FIG. 5C). Because the automatic braking, which keeps the vehicle 1 fully stopped, and "Neutral Hold" are deactivated, the vehicle 1 starts, and the vehicle speed increases.

After that, at time t33, the driver is allowed to lift his/her foot off the accelerator pedal 21A because the cruise control accelerates the vehicle 1 to maintain the speed set by the driver or slows the vehicle 1 down to match the speed that another vehicle ahead of the vehicle 1 is travelling to follow the vehicle at a specific distance.

As described, the controller 10 allows "Neutral Hold" to continue even under this circumstance that the automatic braking system works properly in accordance with a brake hold control logic to keep the vehicle 1 fully stopped while the vehicle 1 is at a complete stop. This prolongs the duration of "Neutral Hold," thus improving the fuel efficiency.

Further, the controller 10 is configured to activate the parking brake 5, in order for "Neutral Hold" to continue, following determination that the vehicle braking system 4 cannot work properly in accordance with a brake hold control logic, thus failing to keep the vehicle 1 fully stopped while the vehicle 1 is at a complete stop in DRIVE.

For the above reason, the controller 10 is configured to allow "Neutral Hold" to continue even under the circumstance that the vehicle braking system 4 cannot work properly in accordance with a brake hold control logic, thus failing to keep the vehicle 1 fully stopped. This prolongs the duration of "Neutral Hold," thus improving the fuel efficiency.

Moreover, the controller 10 is configured to activate the braking brake 5 to keep the vehicle fully stopped even under the above-mentioned circumstance. This improves safety.

As described, both fuel efficiency and safety are improved. The controller 10 is configured to signal the driver to fix the vehicle braking system 4 following determination that the vehicle braking system 4 cannot work properly in accordance with the brake hold control logic, thus failing to keep the vehicle 1 fully stopped while the vehicle 1 is at a complete stop in DRIVE.

Moreover, the controller 10 is configured to allow neutral hold to continue despite an accidental driver input via the accelerator pedal 21A following determination that at least one of the target objects detected by means of at least one obstacle sensor 25 is too close to and an obstacle to the vehicle 1 while the vehicle (1) is at a complete stop in DRIVE.

This improves fuel efficiency because "Neutral Hold" continues even the circumstance that the driver inadvertently and rapidly press the accelerator pedal 21A while the vehicle 1 is at a complete stop in DRIVE, leading to the improved fuel efficiency.

Furthermore, the controller 10 is configured to reactivate "Brake Hold" following determination that the driver lifts his/her foot off the accelerator pedal 21A and steps on the brake pedal 22A upon recognition that the accidental driver input via the accelerator pedal 21A happened. This keeps the vehicle 1 fully stopped again, so improves safety.

Because of the prolonged duration for "Neutral Hold" and the various safety measures, the fuel efficiency and safety are improved.

Although embodiments of the present invention have been disclosed, it will be apparent that modifications may be made by those skilled in the art without departing from the scope of the invention as defined in the appended claims.

### [List of Reference Numerals]

1 ... Vehicle; 3 ... Automatic Gearbox; 4 ... Vehicle Braking System; 5 ... Parking Brake; 10 ... Controller; 25 ... Obstacle Sensor

## Claims

1. A system for controlling a road vehicle, comprising:
an automatic gearbox (3);
a parking brake (5);
a vehicle braking system (4), and
a controller (10) configured to control the vehicle braking system (4) in accordance with a brake hold control logic to keep the vehicle (1) fully stopped even after the vehicle driver lifts his/her foot off a brake pedal (22A) while the vehicle is at a complete stop in DRIVE, and put the gearbox (3) into neutral in accordance with a neutral hold control logic while the vehicle is at a complete stop in DRIVE,
the controller (10) being configured to activate the parking brake (5), in order for neutral hold to continue, following determination that the vehicle braking system (4) cannot work properly in accordance with the brake hold control logic, thus failing to keep the vehicle (1) fully stopped while the vehicle (1) is at a complete stop in DRIVE.

2. The system as claimed in claim 1, including
at least one obstacle sensor (25) arranged for detecting one or more target objects in an environment ahead of and in the path of the vehicle (1).

3. The system as claimed in claim 2, wherein
the controller (10) is configured to allow neutral hold to continue despite an accidental driver input via the accelerator pedal (21A) following determination that at least one of the target objects detected by means of the at least one obstacle sensor (25) is too close to and an obstacle to the vehicle (1) while the vehicle (1) is at a complete stop in DRIVE.

4. The system as claimed in claim 1, wherein
the automatic gearbox (3) has a power input shaft connected to an external motive power source, and a forward clutch mechanism on the power input shaft to selectively engage the power input shaft and a gearshaft.

5. The system as claimed in claim 4, wherein
the controller (10) is configured to disengage the forward clutch mechanism in order to put the gearbox (3) into neutral in accordance with the neutral hold control logic while the vehicle (1) at a complete stop in DRIVE.

6. The system as claimed in claim 1, wherein
the controller (10) is configured to signal the driver to fix the vehicle braking system (4) following determination that the vehicle braking system (4) cannot work properly in accordance with the brake hold control logic, thus failing to keep the vehicle (1) fully stopped while the vehicle (1) is at a complete stop in DRIVE.

7. A method of controlling a road vehicle having a vehicle braking system (4), a parking brake (5), and an automatic gearbox (3), the method comprising:
controlling the vehicle braking system (4) in accordance with a brake hold control logic to keep the vehicle (1) fully stopped while the vehicle (1) is at a complete stop in DRIVE;
putting the gearbox (3) into neutral in accordance with a neutral hold control logic while the vehicle (1) is at a complete stop in DRIVE, and
activating the parking brake (5), in order for neutral hold to continue, following determination that the vehicle braking system (4) cannot work properly in accordance with the neutral hold control logic, thus failing keep the vehicle (1) fully stopped while the vehicle (1) is at a complete stop in DRIVE.

8. The method as claimed in claim 7, including:
signaling the driver to fix the vehicle braking system (4) following determination that the vehicle braking system (4) cannot work properly in accordance with the neutral hold control logic, thus failing keep the vehicle (1) fully stopped while the vehicle (1) is at a complete stop in DRIVE.

9. The method as claimed in claim 7, including:
detecting one or more target objects in an environment ahead of and in the path of the vehicle (1), and
allowing neutral hold to continue despite an accidental driver input via the accelerator pedal (21A) following determination that at least one of the target objects detected is too close to and an obstacle to the vehicle (1) while the vehicle (1) is at a complete stop in DRIVE.

## Patentansprüche

1. System zum Steuern eines Straßenfahrzeugs, umfassend:
ein automatisches Getriebe (3);
eine Feststellbremse (5);
ein Fahrzeugbremssystem (4), und
eine Steuerung (10), welche dazu eingerichtet ist, das Fahrzeugbremssystem (4) in Übereinstimmung mit einer Bremsenhaltesteuerungslogik zu steuern, um das Fahrzeug (1) vollständig angehalten zu halten, selbst nachdem der Fahrzeugführer seinen/ihren Fuß von einem Bremspedal (22A) gehoben hat,
während das Fahrzeug in einem Fahrmodus vollständig angehalten ist, und das Getriebe (3) in Übereinstimmung mit einer Neutralstellungshaltesteuerungslogik in eine Neutralstellung zu bringen, während das Fahrzeug in einem Fahrmodus vollständig angehalten ist,
wobei die Steuerung (10) dazu eingerichtet ist, die Feststellbremse (5) zu aktivieren, damit ein Halten einer Neutralstellung andauert, auf eine Bestimmung folgend, dass das Fahrzeugbremssystem (4) in Übereinstimmung mit der Bremsenhaltesteuerungslogik nicht ordnungsgemäß arbeiten kann, weshalb es versagt, das Fahrzeug (1) vollständig angehalten zu halten, während das Fahrzeug (1) in einem Fahrmodus vollständig angehalten ist.

2. System nach Anspruch 1, umfassend
wenigstens einen Hindernissensor (25), welcher zum Detektieren eines oder mehrerer Zielobjekte in einer Umgebung angeordnet ist, welche vor dem Fahrzeug (1) und in dessen Weg liegen.

3. System nach Anspruch 2, wobei
die Steuerung (10) dazu eingerichtet ist, zuzulassen, dass ein Halten einer Neutralstellung trotz einer versehentlichen Eingabe eines Fahrers über das Beschleunigungspedal (21A) andauert, auf eine Bestimmung folgend, dass wenigstens eines der Zielobjekte, welche mithilfe des wenigstens einen Hindernissensors (25) detektiert wurden, zu nah an dem und ein Hindernis für das Fahrzeug (1) ist, während das Fahrzeug (1) in einem Fahrmodus vollständig angehalten ist.

4. System nach Anspruch 1, wobei
das automatische Getriebe (3) eine Antriebswelle, welche mit einer externen Antriebskraftquelle verbunden ist, und einen Vorwärtskupplungsmechanismus an der Antriebswelle aufweist, um selektiv mit der Antriebswelle und einer Getriebewelle in Eingriff zu kommen.

5. System nach Anspruch 4, wobei
die Steuerung (10) dazu eingerichtet ist, mit dem Vorwärtskupplungsmechanismus auszukuppeln, um das Getriebe (3) in Übereinstimmung mit der Neutralstellungshaltesteuerungslogik in eine Neutralstellung zu bringen, während das Fahrzeug (1) in einem Fahrmodus vollständig angehalten ist.

6. System nach Anspruch 1, wobei
die Steuerung (10) dazu eingerichtet ist, dem Fahrer zu signalisieren, dass das Fahrzeugbremssystem (4) zu reparieren ist, auf eine Bestimmung folgend, dass das Fahrzeugbremssystem (4) in Übereinstimmung mit der Bremsenhaltesteuerungslogik nicht ordnungsgemäß arbeiten kann, weshalb es versagt, das Fahrzeug (1) vollständig angehalten zu halten, während das Fahrzeug (1) in einem Fahrmodus vollständig angehalten ist.

7. Verfahren zum Steuern eines Straßenfahrzeugs, welches ein Fahrzeugbremssystem (4), eine Feststellbremse (5) und ein automatisches Getriebe (3) aufweist, wobei das Verfahren umfasst:
Steuern des Fahrzeugbremssystems (4) in Übereinstimmung mit einer Bremsenhaltesteuerungslogik, um das Fahrzeug (1) vollständig angehalten zu halten, während das Fahrzeug (1) in einem Fahrmodus vollständig angehalten ist;
Bringen des Getriebes (3) in eine Neutralstellung in Übereinstimmung mit einer Neutralstellungshaltesteuerungslogik, während das Fahrzeug (1) in einem Fahrmodus vollständig angehalten ist, und
Aktivieren der Feststellbremse (5), damit ein Halten einer Neutralstellung andauert, auf eine Bestimmung folgend, dass das Fahrzeugbremssystem (4) in Übereinstimmung mit der Bremsenhaltesteuerungslogik nicht ordnungsgemäß arbeiten kann, weshalb es versagt, das Fahrzeug (1) vollständig angehalten zu halten, während das Fahrzeug (1) in einem Fahrmodus vollständig angehalten ist.

8. Verfahren nach Anspruch 7, umfassend:
Signalisieren dem Fahrer, dass das Fahrzeugbremssystem (4) zu reparieren ist, auf eine Bestimmung folgend, dass das Fahrzeugbremssystem (4) in Übereinstimmung mit der Neutralstellungshaltesteuerungslogik nicht ordnungsgemäß arbeiten kann, weshalb es versagt, das Fahrzeug (1) vollständig angehalten zu halten, während das Fahrzeug (1) in einem Fahrmodus vollständig angehalten ist

9. Verfahren nach Anspruch 7, umfassend:
Detektieren eines oder mehrerer Zielobjekte in einer Umgebung vor dem Fahrzeug (1) und in dessen Weg, und
Zulassen, dass ein Halten einer Neutralstellung trotz einer versehentlichen Eingabe eines Fahrers über das Beschleunigungspedal (21A) andauert, auf eine Bestimmung folgend, dass wenigstens eines der detektierten Zielobjekte zu nah an dem und ein Hindernis für das Fahrzeug (1) ist, während das Fahrzeug (1) in einem Fahrmodus vollständig angehalten ist.

## Revendications

1. Système de commande d'un véhicule routier, comprenant :
une boîte de vitesses (3) automatique ;
un frein de stationnement (5) ;
un système de freinage de véhicule (4), et
un dispositif de commande (10) configuré pour commander le système de freinage de véhicule (4) conformément à une logique de commande de maintien de frein pour garder le véhicule (1) complètement à l'arrêt même après que le conducteur du véhicule a levé son pied d'une pédale de frein (22A) pendant que le véhicule est à un arrêt complet en mode CONDUITE, et mettre la boîte de vitesses (3) au point mort conformément à une logique de commande de maintien au point mort pendant que le véhicule est à un arrêt complet en mode CONDUITE,
le dispositif de commande (10) étant configuré pour activer le frein de stationnement (5), afin que le maintien au point mort continue, après le fait de déterminer que le système de freinage de véhicule (4) ne peut pas fonctionner correctement conformément à la logique de commande de maintien de freinage, ne gardant ainsi pas le véhicule (1) complètement à l'arrêt pendant que le véhicule (1) est à un arrêt complet en mode CONDUITE.

2. Système selon la revendication 1, incluant
au moins un capteur d'obstacle (25) agencé pour détecter un ou plusieurs objets cibles dans un environnement devant et dans la trajectoire du véhicule (1).

3. Système selon la revendication 2, dans lequel
le dispositif de commande (10) est configuré pour permettre au maintien au point mort de continuer malgré une entrée accidentelle du conducteur via la pédale d'accélérateur (21A) après le fait de déterminer qu'au moins un des objets cibles détectés au moyen de l'au moins un capteur d'obstacle (25) est trop proche et constitue un obstacle pour le véhicule (1) pendant que le véhicule (1) est à un arrêt complet en mode CONDUITE.

4. Système selon la revendication 1, dans lequel
la boîte de vitesses (3) automatique comporte un arbre d'entrée de puissance relié à une source de puissance motrice externe, et un mécanisme d'embrayage de marche avant sur l'arbre d'entrée de puissance pour engager sélectivement l'arbre d'entrée de puissance et un arbre de transmission.

5. Système selon la revendication 4, dans lequel
le dispositif de commande (10) est configuré pour désengager le mécanisme d'embrayage de marche avant afin de mettre la boîte de vitesses (3) au point mort conformément à la logique de commande de maintien au point mort pendant que le véhicule (1) est à un arrêt complet en mode CONDUITE.

6. Système selon la revendication 1, dans lequel
le dispositif de commande (10) est configuré pour signaler au conducteur de fixer le système de freinage de véhicule (4) après le fait de déterminer que le système de freinage de véhicule (4) ne peut pas fonctionner correctement conformément à la logique de commande de maintien de freinage, ne gardant ainsi pas le véhicule (1) complètement à l'arrêt pendant que le véhicule (1) est à un arrêt complet en mode CONDUITE.

7. Procédé de commande d'un véhicule routier ayant un système de freinage de véhicule (4), un frein de stationnement (5) et une boîte de vitesses (3) automatique, le procédé comprenant :
la commande du système de freinage de véhicule (4) conformément à une logique de commande de maintien de freinage pour garder le véhicule (1) complètement à l'arrêt pendant que le véhicule (1) est à un arrêt complet en mode CONDUITE ;
le fait de mettre la boîte de vitesses (3) au point mort conformément à une logique de commande de maintien au point mort pendant que le véhicule (1) est à un arrêt complet en mode CONDUITE, et
l'activation du frein de stationnement (5), pour que le maintien au point mort continue, après la détermination que le système de freinage de véhicule (4) ne peut pas fonctionner correctement conformément à la logique de commande de maintien au point mort, ne gardant ainsi pas le véhicule (1) complètement à l'arrêt pendant que le véhicule (1) est à un arrêt complet en mode CONDUITE.

8. Procédé selon la revendication 7, incluant :
le signalement au conducteur de fixer le système de freinage de véhicule (4) après le fait de déterminer que le système de freinage de véhicule (4) ne peut pas fonctionner correctement conformément à la logique de commande de maintien au point mort, ne gardant ainsi pas le véhicule (1) complètement à l'arrêt pendant que le véhicule (1) est à un arrêt complet en mode CONDUITE.

9. Procédé selon la revendication 7, incluant :
la détection d'un ou de plusieurs objets cibles dans un environnement devant et dans la trajectoire du véhicule (1), et
le fait de permettre au maintien au point mort de continuer malgré une entrée accidentelle du conducteur/de la conductrice via la pédale d'accélérateur (21A) après la détermination qu'au moins un des objets cibles détectés est trop proche et constitue un obstacle au véhicule (1) pendant que le véhicule (1) est à un arrêt complet en mode CONDUITE.
